# EUROPEAN PATENT APPLICATION

(11) **EP 4 787 826 A1**
(43) Date of publication of application: **05.08.2026**
(21) Application number: 25154803.8
(22) Date of filing: 29.01.2025
(51) Int. Cl.: H04M 3/22, H04M 3/28, H04M 3/42, H04M 3/51

(54) **CALL QUALITY ANALYSIS**

(71) Applicant: Kerv Group Limited, London EC2M 2PF (GB)
(72) Inventor: Ansari, Kyle, London, EC2M 2PF (GB)
(74) Representative: Barker Brettell LLP

(57) **Abstract**

There is provided a computer implemented method (300) of testing the functioning of a telephone recording device. The method comprises: establish (301) a call with a telephone device, the call comprising transmitting a pre-recorded audio to the telephone device; obtaining (303) a recording of audio of the call, recorded at a telephone recording device associated with the telephone device; transcribing (305) the recorded audio of the call to obtain a transcription of the audio of the call; comparing (307) the transcription of the recorded audio of the call to a transcription of the pre-recorded audio that was transmitted to the telephone device to determine a similarity score; if the similarity score is below a predetermined threshold: providing (309) an alert that the telephone recording device associated with the telephone device is not functioning correctly.

## Description

### FIELD

The present disclosure relates to a computer implemented method and device for testing the functioning of a telephone recording device. In particular, it relates to testing the quality of the audio recorded by the telephone recording device to identify if the telephone recording device is functioning correctly.

### BACKGROUND

In some regulated industries, particular in the banking and financial services sector, there is a requirement to record all employee communications - both internally and with external parties - and retain those recordings for a minimum period in the event of a compliant or an allegation of wrongdoing. Consequently, there is currently technology available which will record the audio from telephone calls made via back-office phones, contact centre agents or traders using specialist dealer-board technology.

The financial impact of a failure of this telephone recording technology (through fines) and the reputational damage that would ensue, mean that most organisations have a process in place for checking that the call recording equipment is working effectively - both before start-of-day operations begin, and in some cases during business operation. Historically this was carried out manually - with "walk the floor" testing comprising of an employee randomly (or otherwise) selecting telephone devices, making calls themselves and then manually checking that the recordings that they have made were of a satisfactory quality.

In today's business environment, manual walk-the-floor testing presents several challenges when ensuring that all devices are functioning properly and compliant with regulatory requirements. This method is time-consuming, prone to human error, and often inefficient, especially in large organizations with numerous devices to monitor. Ensuring that every recording device is operational and capturing data correctly is critical for maintaining compliance, yet manual checks can miss malfunctioning or misconfigured devices.

While some automated solutions have been adopted, they often rely on algorithms like Mean Opinion Score (MOS) to assess sound quality. However, MOS, and similar systems, have their draw backs as they may not achieve the reliability and accuracy needed to keep all devices compliant and functioning correctly in a fast-paced regulatory landscape.

The present invention sets out to solve these and other problems to provide improved testing.

### SUMMARY OF INVENTION

According to a first aspect there is provided a computer implemented method of testing the functioning of a telephone recording device, the method comprising: establishing a call with a telephone device, the call comprising transmitting a pre-recorded audio to the telephone device; obtaining a recording of audio of the call, recorded at a telephone recording device associated with the telephone device; transcribing the recorded audio of the call to obtain a transcription of the audio of the call; comparing the transcription of the recorded audio of the call to a transcription of the pre-recorded audio that was transmitted to the telephone device to determine a similarity score; if the similarity score is below a predetermined threshold: providing an alert that the telephone recording device associated with the telephone device is not functioning correctly.

In this way, the functioning of the telephone recording device can be determined through comparing the transcription of the prerecorded audio that has previously been obtained and has been checked for accuracy to a transcription of the audio of the call. If the recording device is functioning correctly both transcriptions should match, as the prerecorded audio transmitted to the telephone device (i.e. playing the pre-recorded audio over the call connection to the telephone device to be tested) is the same as that which has been used to generate the transcription of the pre-recorded audio. However, if they do not match (i.e. similarity score is below a predetermined threshold) then this is indicative that the telephone recording device is not functioning correctly and the quality of the recorded call is suboptimal.

Advantageously, this enables telephone recording devices to be tested remotely without having to physically go to each telephone device and/or telephone recording device. This enables devices to be tested en masse reducing the time to monitor multiple devices. In an area such as a call centre, or banking trading floor, where there are multiple devices, it can reduce the number of faulty devices as each, and every device can be tested within a feasible time period. In addition, the transcription method has been shown to be more accurate that other techniques that are currently used.

The computer implemented method of any preceding claim, wherein providing an alert that the telephone recording device associated with the telephone device is not functioning correctly may comprise: providing an alert to a module configured to investigate to determine a problem leading to the not functioning correctly of the telephone recording device.

The module may comprise an AI model, the AI model configured to perform the investigation. The investigation may comprise performing technical analysis to determine a problem leading to the not functioning correctly. This outcome may be utilised to rectify the functioning of the telephone recording device.

Preferably, establishing a call with a telephone device may comprise instructing the telephone device to initiate a call with the testing device. This may involve sending an instruction to the telephone device to make a call with the testing device.

Preferably, providing an alert that the telephone recording device associated with the telephone device is not functioning correctly may further comprise: providing an alert to a device indicating the problem leading to the not functioning correctly of the telephone recording device. In this way, the alert can be provided to a device, such as one managed by a support team, the alert indicating details of the problem that has led to the device not functioning correctly. The support team can then take appropriate action to remedy the device not functioning. In some arrangements, the problem leading to the not functioning correctly of the telephone recording device may not be able to be determined. In such a case, the alert may simply be to alert the support team to investigate the device further. The alert may be provided to the device may include the outcome of the investigation of the problem leading to the not functioning correctly of the telephone recording device by the module. This may aid in the support team being able to take quicker action as the problem may already have been diagnosed prior to them receiving the alert.

Preferably, providing an alert that the telephone recording device associated with the telephone device is not functioning correctly may comprise: sending an alert to a device that the telephone recording device associated with the telephone device is not functioning correctly.

In this way, the alert is sent to the device to indicate that the telephone device is not functioning correctly. The device may be an external device. The sending may be through a message. The message may be sent over Wi-Fi, Bluetooth, or any other connection means. The providing of the alert may alternatively be displaying an alert on a display. This may be a graphical user interface. Alternatively, or in addition, the displaying on a display may be in addition to sending the alert to the external device such that it is displayed on the external device. This may be the device managed by a support team as outlined above.

Preferably, the comparing the transcription of the recorded audio of the call to a transcription of the pre-recorded audio that was transmitted to the telephone device to determine a similarity score may comprise using Word Error Rate (WER). The WER is calculated by comparing the transcriptions. Word error rate metric ranges between 1 and 0, where 0 indicates that the compared text is exactly identical and 1 indicates that there is no similarity. Thus, the similarity score will be between 1 and 0. Therefore, if the WER is 1 the transcriptions are not identical, and the telephone recording device associated with the telephone device is not functioning correctly. Whereas if the WER is 0 the transcriptions are identical, and the telephone recording device associated with the telephone device is functioning correctly. An appropriate threshold may be selected between 0 and 1 to determine whether the telephone recording device associated with the telephone device is functioning correctly or not. For instance, it may be that a WER of 0 may be essential to determine that the device is functioning correctly, and any other value may indicate that the device is not functioning as it should. In other arrangements, a WER value of any of 0.1, 0.2, 0.3 or 0.5 may be sufficient to indicate that the device is functioning as expected. In other arrangements, other metrics may be used.

The transcription is a text transcription of the audio. The audio is preferably a prerecording of speech. This is because it is desirable to test how the telephone recording device is recording speech.

The telephone recording device not functioning correctly may comprise any of: a problem with the recording device, a problem with the telephone device causing problems with the recording device, and/or a problem with external connections between the telephone and the recording device. In this way, problems with the telephone recording device itself can be determined, as well as problems with the telephone device causing problems with the recording at the telephone recording device, and problems with the network connections between the telephone recording device and the telephone device. Thus, any device failure that has a negative impact on the recording at the telephone recording device can be determined. The external connections may be network connection. For instance, there may be noise in the connections, or a poor or weak signal resulting in poor quality recording at the recording device. The external connections may be wired connections or may be wireless connections. The problem with the recording device may be problems with the hardware and/or software of the recording device. The problem with the telephone device may be hardware and or software of the telephone device that has an impact on the sound recorded at the recording device.

Preferably the method may comprise recording at a telephone recording device associated with the telephone device audio of the call.

Preferably if the similarity score is below a predetermined threshold: prior to providing an alert that the telephone recording device associated with the telephone device is not functioning correctly the method may comprise: establishing a further call with the telephone device, the further call comprising transmitting the pre-recorded audio to the telephone device; obtaining a recording of audio of the further call, recorded at the telephone recording device associated with the telephone device; transcribing the recorded audio of the further call to obtain a transcription of the audio of the further call; and comparing the transcription of the recorded audio of the further call to a transcription of the pre-recorded audio that was transmitted to the telephone device to determine a further similarity score; if the further similarity score is below a predetermined threshold: providing the alert that the telephone recording device associated with the telephone device is not functioning correctly.

In this way, the test is retried in order to determine if the first result was an accurate result showing a low similarity score indicating problem with the telephone recording device. In this way, the accuracy of the test can be increased by eliminating results that may be erroneously identified as not functioning correctly in the first instance. In some instances, the first test call may have been a poor connection that is not typical of the telephone recording device. In this arrangement, if, and only if, the further similarly score is below a predetermined threshold will the alert be provided indicating that the telephone recording device associated with the telephone device is not functioning correctly. In other arrangements, there may be more than two instances of performing the test prior to the alert being provided indicating that the telephone recording device is not functioning correctly. For instance, it might be performed three, four, or more than four times. In some arrangements, the alert may be provided after the first test, but a second retry may be performed and then if found to be functioning after the second test an additional alert may be provided indicating that the device is now functioning correctly.

Preferably, if the similarity score is equal to, or above, a predetermined threshold, the method may further comprise: adding details of the telephone recording device associated with the telephone device to a database to indicate that the telephone recording device associated with the telephone device is functioning correctly.

In this way, details of the telephone recording device are added to a database that includes details of all of the telephone recording devices that have successfully passed the test indicating that they are functioning as desired. Once the device is added to the database it then may not then need to be tested again until the next mandatory test cycle. The mandatory test cycle is preferably every day. However, it could be any time as chosen as required. For instance, it could be every few hours, every other day, every week, or any other time desired.

If the similarity score is below, a predetermined threshold, the method may further comprise: adding details of the telephone recording device associated with the telephone device to a database to indicate that the telephone recording device associated with the telephone device is not functioning correctly.

In this way, details of the telephone recording device are added to a database that includes details of all of the telephone recording devices that have not successfully passed the test indicating that they are not functioning as desired. The database may comprise a log of the telephone recording devices that did not pass and their associated scores. The logs may be reviewed by the server configured to investigate to determine a problem leading to the not functioning correctly of the telephone recording device.

According to a further aspect, there is provided a non-transitory computer-readable medium comprising instructions which, when executed by a computer, cause the computer to carry out the following steps: establishing a call with a telephone device, the call comprising transmitting a pre-recorded audio to the telephone device; obtaining a recording of audio of the call, recorded at a telephone recording device associated with the telephone device; transcribing the recorded audio of the call to obtain a transcription of the audio of the call; comparing the transcription of the recorded audio of the call to a transcription of the pre-recorded audio that was transmitted to the telephone device to determine a similarity score; if the similarity score is below a predetermined threshold: providing an alert that the telephone recording device associated with the telephone device is not functioning correctly.

The non-transitory computer-readable medium may comprise instructions which, when executed by a computer, cause the computer to carry out the method of the previous aspect.

According to a further aspect, there is provided a computer program comprising instructions which, when the program is executed by a computer, cause the computer to carry out the following steps: establishing a call with a telephone device, the call comprising transmitting a pre-recorded audio to the telephone device; obtaining a recording of audio of the call, recorded at a telephone recording device associated with the telephone device; transcribing the recorded audio of the call to obtain a transcription of the audio of the call; comparing the transcription of the recorded audio of the call to a transcription of the pre-recorded audio that was transmitted to the telephone device to determine a similarity score; if the similarity score is below a predetermined threshold: providing an alert that the telephone recording device associated with the telephone device is not functioning correctly.

The computer program may comprise instructions which, when executed by a computer, cause the computer to carry out the method of the previous aspects.

According to a further aspect there is provided a testing device configured to test the functioning of a telephone recording device, the device configured to: establish a call with a telephone device, the call comprising transmitting a pre-recorded audio to the telephone device; obtain a recording of audio of the call, recorded at a telephone recording device associated with the telephone device; transcribe the recorded audio of the call to obtain a transcription of the audio of the call; compare the transcription of the recorded audio of the call to a transcription of the pre-recorded audio that was transmitted to the telephone device to determine a similarity score; if the similarity score is below a predetermined threshold: provide an alert that the telephone recording device associated with the telephone device is not functioning correctly.

The testing device may be configured to perform the method of the above aspects.

According to a further aspect there is provided a system comprising: the device of the above aspect, a telephone recording device, and a telephone device.

The system may comprise a plurality of telephone devices and the testing device may be configured to test the functioning of a telephone recording device at each of the telephone recording devices.

In some arrangements, there may be multiple telephone devices each having a different telephone recording device associated with it. The system may be configured to test each of the telephone recording device. In other arrangements, there may be a single telephone recording device associated with multiple telephone devices. The test may be conducted at each of the telephone recording devices. This way ensures that if the telephone recording device is not functioning with any single one of the telephone device this can be detected, and action taken. This may arise, for instance, as each telephone device and the telephone recording device will have a connection to each other and any one of these could be not functioning correctly. The system may further comprise a database as outlined above.

### DESCRIPTION OF FIGURES

Figure 1 shows a system for testing the functioning of a telephone recording device according to the present disclosure;
Figure 2 shows a message flow diagram for testing the functioning of a telephone recording device according to the present disclosure;
Figure 3 shows a flow chart showing a computer implemented method for testing the functioning of a telephone recording device according to the present disclosure; and
Figure 4 shows a data processing device associated with performing the computer implemented method for testing the functioning of a telephone recording device according to the present disclosure.

### DETAILED DESCRIPTION

The present disclosure relates to a testing device, and methods, for testing the functioning of a telephone recording device. In particular, the device establishes a call with a telephone device utilising audio that has already been pre-transcribed. The audio of the call is then recorded by the recording device to be tested and then that recorded audio also transcribed to be compared to the pre-transcribed transcription. Comparing these two transcriptions can then be used to alert whether the recording device is functioning correctly depending on how similar the transcriptions are to each other. Such an arrangement provides a convenient, quick, remote, and accurate way of determining if the recording device is functioning correctly.

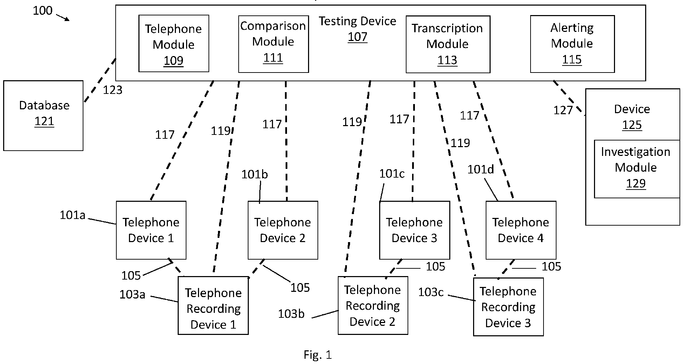

Figure 1 shows a system 100 for testing the functioning of a telephone recording device according to the present disclosure. The system comprises telephone devices 101a-101d each having associated with them a telephone recording device 103a-c. In particular, telephone device 1 101a is associated with telephone recording device 1 103a. Telephone recording device 1 103a is also associated with telephone device 2 101b. Telephone device 3 101c is associated with telephone recording device 2 103b. Telephone device 4 101d is associated with telephone recording device 3 103c.

Each telephone device 101a-d is a device that is capable of making telephone calls to other telephone devices within the system 100 or devices external to system 100. Alternatively, they may have dedicated direct lines to specific other telephone devices. For instance, on a bank trading floor it may be that the telephone devices 101a-d have direct connections with the telephone devices of brokers and other entities but are not capable of calling outside their limited network of direct lines. The telephone devices 101a-d may be connected to other telephone devices to make calls by wired connections (such as using optical fibres), or they may be connected via wireless connections (such as using WI-FI, 3G, 4G, 5G, etc.). The telephone devices 101a-d are voice over internet protocol (VoIP) telephone devices.

The telephone recording devices 103a-c are devices that are capable of recording the calls made from the telephone devices 101a-d. For instance, telephone recording device 1 103a is associated with telephone device 101a in that it can record the telephone calls made and received by telephone device 1 101a. Telephone recording devices 103a-c are digital devices that record and store the audio in a memory at the telephone recording devices 103a-c. The telephone recording devices 103a-c are connected to their respective telephone device(s) 101a-d via connection 105. The connection 105 can be wired connections (such as using optical fibres), or they may be connected via wireless connections (such as using WI-FI, 3G, 4G, 5G, etc.). This allows the telephone recording devices 103a-c to record the audio from the calls made from their respective device 101a-d.

For instance, if a call is made between telephone device 1 101a and telephone device 2 101b the telephone recording device 1 103a listens in to the call and records the audio received at telephone device 1 and sent from telephone device 1 103a. More specifically, the recording device 103a records the audio streams during the call between the telephone device 1 101a and telephone device 2 101b. It does this by receiving this data from the telephone device that it is associated with over connection 105, i.e. telephone device 1 101a. In this instance, the telephone recording device 1 103a also records the call from data received from telephone device 2 101b, in the same way as outlined above. However, in arrangements where the telephone device is calling an external telephone device the telephone recording device would only obtain a single recording.

It is desirable to determine if the recordings made by the telephone recording devices 103a-c are accurate and are recording correctly. System 100 includes testing device 107 for this purpose.

The testing device 107 includes telephone module 109. Telephone module 109 is capable of establishing calls between the testing device 107 and each of the telephone devices 101a-d over connection 117. The connection 117 is the same type of connection that the telephone devices 101a-d have to each other, and other telephone devices (not shown), to establish calls between the testing device 107 and the telephone devices 101a-d in the same way in which they will be making their calls between telephone devices.

The testing device 107 also includes transcription module 113. The transcription module 113 is capable of transcribing audio data into text data, such as calls recorded at the telephone recording devices 103a-c, as will be explained below. Testing device 107 is connected to the telephone recording devices 103a-c over connection 119.

The testing device 107 also includes comparison module 111. Comparison module 111 is capable of comparing transcriptions from the telephone recording devices 103a-c to known transcriptions. The known transcription may be received from external database 121 over connection 123.

The testing device 107 also includes alerting module 115. Testing device 107 is connected to external device 125 over connection 127. The testing device 107 is capable of sending an alert, over connection 127, generated at alerting module 115 if there is determined to be a problem in the functioning of the telephone recording devices 103a-c after testing. Device 125 includes investigation module 129 that is capable of investigating the cause of the problem with the telephone recording devices 103a-c.

Connections 117, 119, 123 and 127 can be wired connections (such as using optical fibres) or may be a wireless connections (such as using WI-FI, 3G, 4G, 5G, etc.).

The method of testing the functioning of the telephone recording devices 103a to 103c by the testing device 107 will now be described in more detail. For the sake of example, the method will be described in relation to the testing device 107 testing the functioning of a telephone recording device 2 103b. However, it would be understood that the following approach would be the same when testing each of telephone recording devices 103a-c.

Prior to the testing, the testing device 107 receives from database 121 audio data and a transcription of said audio. The transcription of the audio is a transcription that has been verified and is known to be an accurate and exact transcription of the audio such that it can be used to compare to other obtained transcriptions.

The testing of the functioning of telephone recording device 2 103b then starts with the testing device 107 establishing a call with telephone device 3 101c. This involves the telephone module 109 of the testing device 107 instructing the telephone device 3 101c to initiate the call with the testing device 107. This may involve the testing device 107 using an API call to instruct the telephone device 3 101c to initiate a call with the telephone module 109 of the testing device 107. The call is made from the telephone device 3 101c to the testing device 107over connection 117. Once telephone module 109 is connected to telephone device 3 101c through the call the audio data that was received from database 121 is transmitted over the call. In other words, the audio of the call between testing device 107 and telephone device 3 101c is the audio data received from the database 121. This means that the call between the testing device 107 and telephone device 3 101c consists of known audio (i.e. the audio received from the database 121).

Whilst the call is taking place between the testing device 107 and telephone device 3 101c the telephone recording device 2 103b records the audio of the call, as outlined above. Once the call has finished the telephone recording device 2 103b sends the recorded audio of the call over connection 119 to the testing device 107. This is in response to the testing device 107 sending a message to the telephone recording device 2 103b requesting it to send said audio.

The recorded audio of the call received from the telephone recording device 2 103b is then transcribed by the transcription module 113. The transcription is carried out using transcription software that is configured to analysis the audio and covert it to text. A transcription of the recorded audio of the call is then output by the transcription module 113, to the comparison module 111

As the call between the testing device 107 and telephone device 3 101c consists of known audio this can be used to check whether the telephone recording device 103b is working correctly - this is done by comparison module 111. Comparison module 111 receives the transcription of the known audio received from the database 121 along with the transcription of the call transcribed by transcription module 113 to compare the two transcriptions. The comparison is done by determining a similarity score using Word Error Rate (WER) technique. Word error rate metric ranges between 1 and 0, where 0 indicates that the compared text is exactly identical and 1 indicates that there is no similarity. Thus, the similarity score will be between 1 and 0. Therefore, if the WER is 1 the transcriptions are deemed to not be identical and the telephone recording device 2 103b is not functioning correctly for recording calls of telephone device 3 101c. Whereas if the WER is 0 the transcriptions are identical and the telephone recording device 2 103b is functioning correctly in recording calls of telephone device 3 101c. An appropriate threshold may be selected between 0 and 1 to determine whether the telephone recording device 103b associated with telephone device 101c is functioning correctly or not. For instance, it may be that a WER of 0 may be essential to determine that the device is functioning correctly, and any other value may indicate that the device is not functioning as it should. In other arrangements, a WER value of any of 0.1, 0.2, 0.3 or 0.5 may be sufficient to indicate that the device is functioning as expected.

If the WER is such that it is determined that the telephone recording device 2 103b is functioning correctly it is known that telephone device 3 101c and telephone recording device 2 103b are set up such that calls at the telephone device 3 101c are being successfully recorded. The details of that telephone recording device 2 103b is added to a list of correctly functioning telephone recording devices at database 121. Likewise, the details of the telephone device 2 103b may also be added to database 121 in a list of telephone devices that are known to be being successfully recorded.

If the WER is such that it indicates that telephone recording device 2 103b is not functioning correctly, i.e. there is a discrepancy between the transcriptions, such that the WER indicates that there are significant differences between the transcriptions then the testing device 107 repeats the process again to check the accuracy of the first test to ensure it was not an anomalous result. A further call is then made again between testing device 107 and the telephone device 3 101c using the known audio, and the recording of this further call received at the testing device 107. This is then transcribed and compared to the transcription of the known audio that has been received by the database 121, in the same way as outlined above. If the WER indicates that the that telephone recording device 2 103b is now functioning correctly then it is added to the list of devices that are functioning at database 121 as outlined above.

However, if it is still determined that the telephone recording device 2 103b is not functioning correctly, after the second test, an alert is generated at alerting module 115 which is then sent to external device 125 over connection 127. The alert indicates to the external device 125 that there is a problem with the telephone recording device 2 103b. This may be output to a user at a graphical user interface at device 125.

External device 125 also investigates the cause of the telephone recording device 2 103b not functioning correctly using investigation module 129. Investigation module utilises an AI model trained to analyse and detect the source of the errors. This may involve the use of a large language model and/or a deep neural network model. Such an AI model may include Pulse AI a machine learning model developed by Kerv^{®}. This may be output from external device 125 to a support team who can address the errors to rectify the lack of functioning of the telephone recording device 2 103b. Alternatively, the testing device 107 may be capable of automatically making the adjustments to the telephone recording device 2 103b itself so as to rectify the lack of functioning of said device.

In addition, if the WER is such that it is determined that the telephone recording device 2 103b is not functioning correctly it is known that telephone device 3 101c and telephone recording device 2 103b are set up such that calls at the telephone device 3 101c are not being successfully recorded. The details of that telephone recording device 2 103b is added to a list of not-functioning telephone recording devices stored at database 121. Likewise, the details of the telephone device 2 103b may also be added to a list stored at database 121 of telephone devices that are known to currently not be recorded correctly. This list may be sent to a user for investigation into the errors that have led to this malfunctioning of the devices. This may include the details of the investigation carried out and received by investigation module 129.

The testing device 107, after testing the functioning of one device (telephone recording device 2 103) above may then move on to testing the functionality of the other telephone recording devices 103a-b. In this way, each of the telephone recording devices can be tested to ensure their functionality and compliance. In a location where there are multiple devices to be tested, such as a bank trading floor, the system 100 can ensure the functionality and compliance with regulations of multiple devices. By having such a system, a large number of telephone recording devices can be tested remotely in a quick and accurate way compared to currently known techniques. Although the testing of each device may be done sequentially, it would be understood that testing device 107 may have the capability to test multiple telephone recording devices 103a-b at once at the same time thereby further reducing the time taken to test all devices in a single location.

Although it is described above that the testing is whether the telephone recording device is functioning correctly if there is a problem this may be due to an issue with the recording device itself, or in some scenarios a problem with the telephone device causing problems with the recording device. The problem could also be a problem with external connections between the telephone device and the telephone recording device. Therefore, problems with the telephone recording device itself can be determined, as well as problems with the telephone device causing problems with the recording at the telephone recording device, and problems with the network connections between the telephone recording device and the telephone device. Thus, any device failure that has a negative impact on the recording at the telephone recording device can be determined. The external connections that may be experiencing problems may be network connection 117 or network connection 105. For instance, there may be noise in the connections, or a poor or weak signal resulting in poor quality recording at the recording device. The problem with the recording device, or the telephone device, may be problems with the hardware and/or software of the recording device and/or telephone device.

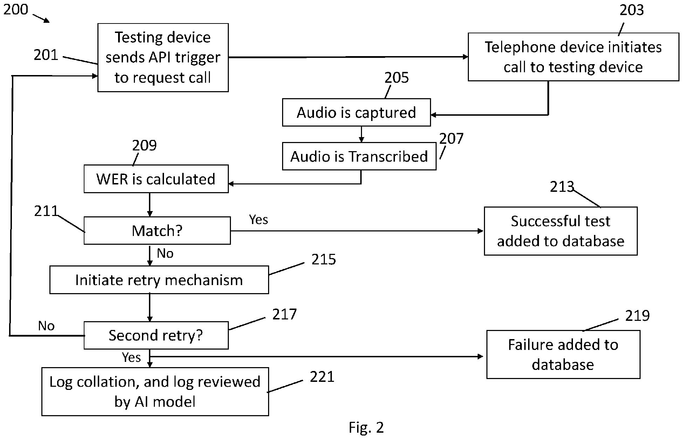

Figure 2 shows a message flow diagram 200 for testing the functioning of a telephone recording device (such as telephone recording devices 103a-c) according to the present disclosure. As shown at step 201 the testing device 107 initiates an API trigger to request a call from to the telephone device to be tested. The telephone device to be tested then initiates, at step 203, a call with the testing device (as described in relation to Figure 1 above). The testing device then plays a pre-recorded test audio file over the line with the telephone device associated with the telephone recording device to be tested (as outlined above in relation to Figure 1 the audio file received from database 121). The call between the telephone recording device and the testing device 107 automatically terminates after 10 seconds. The call in this instance is a SIP (Session Initiation Protocol) call.

The telephone device is continuously monitored by the telephone recording device, which captures the audio of the test call at step 205. Once the audio is captured, it is processed by the transcription module that converts the audio into text at step 207. The accuracy is then checked as the transcribed text is compared to a reference transcription of the pre-recorded audio (from the database 121) using the Word Error Rate (WER) metric to evaluate the accuracy of the transcription at step 209.

If a match is determined at step 211 then the details of the telephone recording device is added to a database 121 at step 213.

If there is not a match a retry mechanism is then initiated at step 215. It is then determined, at step 217, if there has already been a retry. If not, then the process 201 to 211 are repeated. If at step 217 it is determined that the second retry has been carried out and there is no match at step 211 then an alert is sent to the external device 125 containing the investigation model 129 which collects relevant log files and performs a technical analysis of the issue (as outlined above in relation to Figure 1, such as using an AI model) at step 221. The external device 125 may then notify the appropriate support team to address the problem. The failure is then added to database, at step 219, as a list of devices that are not functioning. The above processes are then carried out to test each of the telephone recording devices in the system.

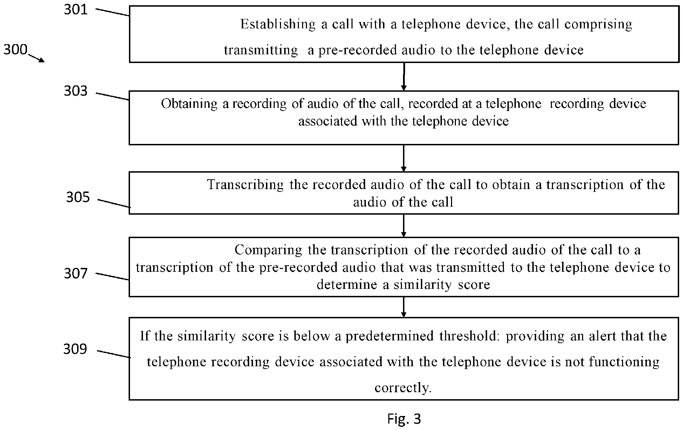

Figure 3 shows a flow chart showing a computer implemented method 300 for testing the functioning of a telephone recording device according to the present disclosure.

At step 301, a call is establish with a telephone device, the call comprising transmitting a pre-recorded audio to the telephone device.

At step 303, a recording of audio of the call is obtained, recorded at a telephone recording device associated with the telephone device.

At step 305, the recorded audio of the call is transcribed to obtain a transcription of the audio of the call.

At step 307, the transcription of the recorded audio of the call is compared to a transcription of the pre-recorded audio that was transmitted to the telephone device to determine a similarity score.

At step 309, if the similarity score is below a predetermined threshold: an alert is provided that the telephone recording device associated with the telephone device is not functioning correctly.

The above method 300 may be performed as described in relation to Figures 1 and 2 above.

It will be appreciated that any of the methods described herein, and any step of the methods, can be implemented by a computer. Such implementation may take the form of a processor executing instructions stored on a non-transitory computer-readable medium or media, wherein when executed the instructions cause the processor to perform any one or more steps of any of the methods described herein. Each step of any method may be implemented by different processors that are all collectively acting in accordance with computer-readable instructions stored on one or more storage media. The processor(s) may be component(s) of system, for example a processor of a computing device.

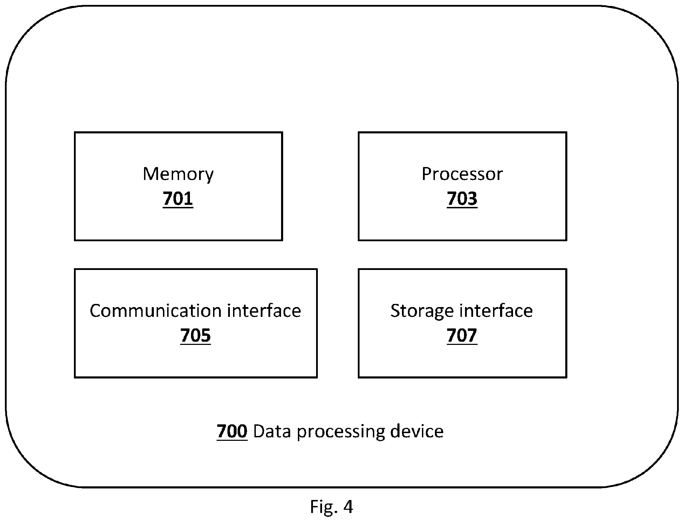

Similarly, any steps of any of the methods described herein may be performed by data processing device. By way of example, Figure 4 shows, in schematic form, a data processing device 700 that is suitable for performing the functions of the testing device 107.

Data processing device 700 includes a processor 703 for executing instructions. Instructions may be stored in a memory 701. Processor 703 may include one or more processing units (e.g., in a multi-core configuration) for executing instructions. The instructions may be executed within a variety of different operating systems on the data processing device 700, such as UNIX, LINUX, Microsoft Windows^{®}, etc. More specifically, the instructions may cause various data manipulations on data stored in memory 701 (e.g., create, read, update, and delete procedures). It should also be appreciated that upon initiation of a computer-implemented method, various instructions may be executed during initialization. Some operations may be required to perform one or more methods described herein, while other operations may be more general and/or specific to a particular programming language (e.g., C, C#, C++, Java, or other suitable programming languages, etc.).

Processor 703 is operatively coupled to a communication interface 705 such that data processing device 700 can communicate with a remote device, such as another data processing device of the system. For example, communication interface 705 may receive communications from another member of the system 100. The communication interface 705 may comprise a transmitter and a receiver, for instance.

Processor 703 may also be communicatively coupled to a storage device, depending on the function of data processing device 700 within the context of the system. The storage device is any computer-operated hardware suitable for storing and/or retrieving data, where in the case of a secure storage medium the data is stored and retrieved securely. For instance, the storage device may be database 121.

The storage device may store the pre-recorded audio and transcription used for the testing, and/or may store the results of the testing procedure, for instance, and it can be external to data processing device 700 and located remotely. Alternatively, it can be integrated in data processing device 700. For example, data processing device 700 may include memory 701 as one or more hard disk drives acting as a storage database. Alternatively, where the storage device is external to data processing device 700, it can comprise multiple storage units such as hard disks or solid-state disks in a redundant array of inexpensive disks (RAID) configuration. The storage device may include a storage area network (SAN) and/or a network attached storage (NAS) system. In some arrangements, the system and methods may be deployed in a cloud-based environment.

Memory 701 may include, but is not limited to, RAM such as dynamic RAM (DRAM) or static RAM (SRAM), ROM, erasable programmable read-only memory (EPROM), electrically erasable programmable read-only memory (EEPROM), and non-volatile RAM (NVRAM). The above memory types are exemplary only and are not limiting as to the types of memory usable for storage of a computer program.

The term "non-transitory computer-readable media/medium", used herein, is intended to be representative of any tangible computer-based device implemented in any method or technology for short-term and long-term storage of information, such as, computer-readable instructions, data structures, program modules and sub-modules, or other data in any device. The methods described herein may be encoded as executable instructions embodied in a tangible, non-transitory, computer readable medium, including, without limitation, a storage device, and/or a memory device. When executed by a processor, such instructions cause the processor to perform at least a portion of the methods described herein. The term "non-transitory computer-readable media/medium" includes all tangible, computer-readable media, including, without limitation, non-transitory computer storage devices, including, without limitation, volatile and non-volatile media, and removable and non-removable media such as a firmware, physical and virtual storage, CD-ROMs, DVDs, and any other digital source such as a network or the Internet, as well as yet to be developed digital means, with the sole exception being a transitory, propagating signal.

The above-described embodiments of the disclosure may be implemented using computer programming or engineering techniques including computer software, firmware, hardware or any combination or subset thereof. Any such resulting program, having computer-readable code means, may be embodied, or provided within one or more computer-readable media, thereby making a computer program product, i.e., an article of manufacture, according to the discussed embodiments of the disclosure. The article of manufacture containing the computer code may be made and/or used by executing the code directly from one medium, by copying the code from one medium to another medium, or by transmitting the code over a network.

While the disclosure has been described in terms of various embodiments, the person skilled in the art will recognise that the disclosure can be practiced with modification within the spirit and scope of the claims.

Although Figure 1 shows certain association of telephone recording device with telephone devices it would be understood that any other type of association of telephone recording devices with telephone devices may be implemented. For instance, a single telephone recording device may be associated with any number of telephone devices. For instance, a single telephone recording device may be associated with all of the telephone devices to be tested. In other arrangements, each telephone device may have its own unique telephone recording device to be tested.

Although telephone recording devices are described as being digital devices it would be understood that any type of recording device could be used. For instance, the telephone recording devices could be analogue recording devices in alternative arrangements. In some arrangements the telephone recording devices may be part of the telephone device itself rather than a separate device. In further arrangements, the telephone recording device may be cloud based software that is capable of recording rather than being associated with a physical device. Although it is shown that the recording devices may be separate to the testing device 107, in other arrangements, the recording device may be part of the testing device 107.

Although it is described that the telephone recording device record and store the audio of the calls, it would be understood that in some arrangements they may also record the video of the call too. By comparing the transcription of the audio of the call it may be indicative of whether there is a problem with the video too, as problems with audio may also imply problems with the video recording.

It has been described that the telephone recording devices have memory at the recording devices for storing the audio recordings. However, the audio may be stored at an external database if long term storage is required.

It is described above that the recording is done by the recording device receiving data from the telephone device that it is associated with. However, in some arrangements it may intercept the connection between the telephone devices itself to obtain the audio of the call.

Although database 121 is shown external to testing device 107 it would be understood that it may be part of testing device 107.

It is outlined that the prior to the testing the testing device 107 receives from database 121 audio data and a transcription of said audio, and that the transcription of the audio is known to be an accurate transcription of the audio. This may be a human transcription such that it is known to be accurate. Alternatively, the audio may be received from database 121 and the transcription may be made by transcription module 113. Preferably this transcription will have been checked to ensure its accuracy.

The transcription of the calls during the test is carried out by transcription software. This may, in some arrangements, involve AI transcription software.

Although it is described that the devices are VoIP device in other arrangements the telephone devices 101a-d may be a public switched telephone network (PSTN). The telephone devices may alternatively, or in addition, be a dealer board otherwise known as a trading turret.

Although Word Error rate (WER) is stated above as the technique to determine the similarity between transcriptions in other arrangements any other technique may be used that is capable of comparing text between two documents.

Although it is described in relation to Figure 1 that the telephone device initiates the call (after being instructed to by the testing device) in other arrangements the testing devices may initiate the calls instead.

## Claims

1. A computer implemented method of testing the functioning of a telephone recording device, the method comprising:
establishing a call with a telephone device, the call comprising transmitting a pre-recorded audio to the telephone device;
obtaining a recording of audio of the call, recorded at a telephone recording device associated with the telephone device;
transcribing the recorded audio of the call to obtain a transcription of the audio of the call;
comparing the transcription of the recorded audio of the call to a transcription of the pre-recorded audio that was transmitted to the telephone device to determine a similarity score;
if the similarity score is below a predetermined threshold:
providing an alert that the telephone recording device associated with the telephone device is not functioning correctly.

2. The computer implemented method of any preceding claim, wherein providing an alert that the telephone recording device associated with the telephone device is not functioning correctly comprises: providing an alert to a module configured to investigate to determine a problem leading to the not functioning correctly of the telephone recording device.

3. The computer implemented method of claim 2, wherein providing an alert that the telephone recording device associated with the telephone device is not functioning correctly further comprises: providing an alert to a device indicating the problem leading to the not functioning correctly of the telephone recording device.

4. The computer implemented method of any preceding claim, wherein providing an alert that the telephone recording device associated with the telephone device is not functioning correctly comprises: sending an alert to a device that the telephone recording device associated with the telephone device is not functioning correctly.

5. The computer implemented method of any preceding claim, wherein the comparing the transcription of the recorded audio of the call to a transcription of the pre-recorded audio that was transmitted to the telephone device to determine a similarity score comprises using Word Error Rate (WER).

6. The computer implemented method of any preceding claim, wherein the telephone recording device not functioning correctly comprises any of: a problem with the recording device, a problem with the telephone device causing problems with the recording device, and/or a problem with external connections between the telephone and the recording device.

7. The computer implemented method of any preceding claim, further comprising recording at a telephone recording device associated with the telephone device audio of the call.

8. The computer implemented method of any preceding claim, wherein if the similarity score is below a predetermined threshold:
prior to providing an alert that the telephone recording device associated with the telephone device is not functioning correctly:
establishing a further call with the telephone device, the further call comprising transmitting the pre-recorded audio to the telephone device;
obtaining a recording of audio of the further call, recorded at the telephone recording device associated with the telephone device;
transcribing the recorded audio of the further call to obtain a transcription of the audio of the further call; and
comparing the transcription of the recorded audio of the further call to a transcription of the pre-recorded audio that was transmitted to the telephone device to determine a further similarity score;
if the further similarity score is below a predetermined threshold:
providing the alert that the telephone recording device associated with the telephone device is not functioning correctly.

9. The computer implemented method of any preceding claim, wherein if the similarity score is equal to, or above, a predetermined threshold, the method further comprises:
adding details of the telephone recording device associated with the telephone device to a database to indicate that the telephone recording device associated with the telephone device is functioning correctly.

10. The computer implemented method of any preceding claim, wherein if the similarity score is below, a predetermined threshold, the method further comprises:
adding details of the telephone recording device associated with the telephone device to a database to indicate that the telephone recording device associated with the telephone device is not functioning correctly.

11. A non-transitory computer-readable medium comprising instructions which, when executed by a computer, cause the computer to carry out the method of any of claims 1 to 10.

12. A testing device configured to test the functioning of a telephone recording device, the device configured to:
establish a call with a telephone device, the call comprising transmitting a pre-recorded audio to the telephone device;
obtain a recording of audio of the call, recorded at a telephone recording device associated with the telephone device;
transcribe the recorded audio of the call to obtain a transcription of the audio of the call;
compare the transcription of the recorded audio of the call to a transcription of the pre-recorded audio that was transmitted to the telephone device to determine a similarity score;
if the similarity score is below a predetermined threshold:
provide an alert that the telephone recording device associated with the telephone device is not functioning correctly.

13. The testing device of claim 12, wherein the testing device is configured to perform any of the claims 1 to 10.

14. A system comprising: the device of claim 12 or 13, a telephone recording device, and a telephone device.

15. The system of claim 14, wherein the system comprises a plurality of telephone devices and the testing device is configured to test the functioning of a telephone recording device at each of the telephone recording devices.
